# EUROPÄISCHE PATENTSCHRIFT

(11) **EP 2 971 400 B1**
(45) Veröffentlichungstag und Bekanntmachung des Hinweises auf die Patenterteilung: **04.01.2017**
(21) Anmeldenummer: 14708878.5
(22) Anmeldetag: 10.03.2014
(51) Int. Cl.: E04D 3/36, E04F 13/08, E04B 1/76, F16B 13/00

(54) **TÜLLE UND BEFESTIGUNGSELEMENT ZUM BEFESTIGEN EINER MATERIALSCHICHT**
NOZZLE AND FASTENING ELEMENT FOR FASTENING A MATERIAL LAYER
DOUILLE ET ÉLÉMENT DE FIXATION POUR FIXER UNE COUCHE DE MATÉRIAU

(30) Priorität: 13.03.2013 DE 102013004392
(43) Veröffentlichungstag der Anmeldung: 20.01.2016
(73) Patentinhaber: SFS Intec Holding AG, 9435 Heerbrugg (CH)
(72) Erfinder: BORSBOOM, Lucas, NL-6041 LL Roermond (NL)
(86) Internationale Anmeldenummer: PCT/EP2014/054573
(87) Internationale Veröffentlichungsnummer: WO 2014/139946

(56) Entgegenhaltungen:
- DE-A1- 3 500 084
- DE-U1- 29 618 959

## Beschreibung

Die vorliegende Erfindung betrifft eine Tülle zum Befestigen einer Materialschicht auf einer Unterkonstruktion, umfassend einen Teller und einen daran angeformten Hohlschaft zur Aufnahme einer Befestigungsschraube, wobei in dem Hohlschaft eine Stufenbohrung vorgesehen ist, wobei die Stufenbohrung mindestens zwei Stufen zwischen mindestens drei Bereichen umfasst, wobei der Hohlschaft an einer äußeren Oberfläche zumindest teilweise konisch zulaufend ausgebildet ist, wobei der Hohlschaft mit radial aufweitbaren Elementen versehen ist, und wobei die aufweitbaren Elemente außen in dem konisch zulaufend ausgebildeten Teil des Hohlschaftes als axiale Nuten ausgebildet sind.

Die vorliegende Erfindung betrifft weiterhin ein Befestigungselement zum Befestigen einer Materialschicht auf einer Unterkonstruktion, wobei das Befestigungselement zweiteilig ist und die erfindungsgemäße Tülle sowie eine Befestigungsschraube umfasst.

Eine beispielsweise im Zusammenhang mit der Gebäudedämmung häufig anzutreffende Aufgabe besteht in der Fixierung von einer Materialschicht, beispielsweise von Dämmstoff und Dachbahnen, an einer Unterkonstruktion. Um die Montage eines Dämmstoffs und einer Dachbahn möglichst einfach zu gestalten und um eine Beschädigung des Dämmstoffs und/oder der Dachbahn bei der Montage zu verhindern, werden üblicherweise Befestigungselemente verwendet, die eine Tülle und eine an die Tülle angepasste Schraube umfassen. Derartige Befestigungselemente beziehungsweise Tüllen sind beispielsweise aus den Dokumenten DE 296 18 959 U1, EP 0 600 284 A1 und EP 1 117 882 B1 bekannt.

Die DE 35 00 084 A1 beschreibt ein Befestigungselement umfassend einen Teller und einen angeformten kurzen Schaft. Der zur Aufnahme einer Befestigungsschraube ausgebildete Schaft umfasst eine Stufenbohrung mit einer Schulter, die im montierten Zustand als Anschlag für die Befestigungsschraube wirkt, und Lippen mit abgeschrägten oberen Flächen. Es wird auf diese Weise eine Stufenbohrung mit zwei Stufen erzeugt.

Weiterhin sind auch Längsschlitze im unteren Bereich des Schafts beschrieben, wodurch bewegliche Lippen am unteren Schaftende bereitgestellt werden, welche federnd abgespreizt werden können, wenn die Befestigungsschraube durch den Schaft hindurchtritt.

Die DE 10 2010 048 537 A1 beschreibt eine Tülle mit einem Teller und einem daran angeformten Hohlschaft zur Aufnahme einer Befestigungsschraube, wobei in dem Hohlschaft eine Stufenbohrung angeordnet ist, welche insgesamt vier unterschiedliche Radien aufweist. Weiterhin ist ein Längenkompensationselement im Bereich des Schafts beschrieben.

Die US 2012/0017529 A1 beschreibt eine Tülle umfassend einen Teller und einen daran angeformten Hohlschaft, in welchem bei der Montage eine Befestigungsschraube aufgenommen wird. Am unteren Ende des Schafts sind flexibel nach Außen biegbare Lippen angeordnet, die durch Nuten voneinander getrennt sind. Weiterhin sind im Inneren des hohl ausgebildeten Schafts vorstehende Rippen angeordnet, die eine zuverlässige Nutzung der Tülle mit unterschiedlich dicken Befestigungsschrauben erlauben.

Die DE 36 06 321 A1 beschreibt einen Isolierplattendübel umfassend einen Teller und einen daran angeformten Hohlschaft, der auf seiner Innen- und Außenseite radial vorstehende Rippen aufweist, durch welche Bohrlochtoleranzen ausgeglichen werden.

Nachteilig bei einigen der bekannten Befestigungselementen ist insbesondere die Notwendigkeit, für verschiedene an die vorhandene Unterkonstruktion beziehungsweise das Gewicht der verwendeten Dämmstoffe angepasste Schrauben zu verwenden. Daher müssen auch eine Vielzahl unterschiedlicher an die Schrauben und die Dämmstoffe angepasste Tüllen bereitgestellt werden. Insgesamt müssen also eine Vielzahl verschiedener Tüllen und Befestigungselemente hergestellt und bevorratet werden, um immer eine ausreichend sichere Befestigung zu ermöglichen.

Die vorliegenden Erfindung ermöglicht, die Herstellung und Bevorratung der Tüllen beziehungsweise der Befestigungselemente zu vereinfachen.

Der vorliegenden Erfindung liegt die Aufgabe zugrunde, die Stabilität der universell ausgeführten Tülle unabhängig von der Befestigungsschraube zu verbessern.

Diese Aufgabe wird mit den Merkmalen der unabhängigen Ansprüche gelöst.

Vorteilhafte Ausführungsformen sind in den abhängigen Ansprüchen angegeben.

Die Erfindung baut auf der gattungsgemäßen Tülle dadurch auf, dass die Nuten jeweils am Nutengrund zumindest teilweise mit einem dünnen, durch das Aufweiten dehn- oder zerbrechbaren Boden versehen sind. Das Vorsehen des Bodens am Grund der Nuten erhöht insbesondere bei Verwendung einer Befestigungsschraube, die den Verengungsabschnitt nicht aufweitet, die Stabilität der universell ausgeführten Tülle an ihrem dem Teller abgewandten Ende, welches üblicherweise durch die zu befestigende Materialschicht, beispielsweise Dämmstoff und Dachbahnen, hindurchgesteckt werden muss. Gleichzeitig kann trotz des dünnen Bodens am Grund der Nute die Deformation des Verengungsabschnittes beim Aufweiten vorbestimmt werden. Der Boden am Grund der Nuten ist dünn relativ zu der radialen Dicke der angrenzenden, benachbarten aufweitbaren Elemente. Der Boden am Grund der Nuten kann beispielsweise als dünn angesehen werden, wenn seine Dicke kleiner als ein fünftel der Dicke der benachbarten aufweitbaren Elemente beträgt. Der Dünne Boden kann weiterhin eine über die Nutenbreite zwischen zwei benachbarten, aneinander angrenzenden aufweitbaren Elementen gleichbleibende Dicke aufweisen. Beim Aufweiten der Tülle durch die Befestigungsschraube wird der Boden entweder auseinander gezogen, so dass seine Dicke abnimmt, da sein Volumen gleichbleibt, oder er wird unter den anliegenden Zugkräften zerbrochen, da seine Elastizität nicht ausreichend ist. Die Tülle kann je nach Bedarf, das heißt je nach Materialschicht, beispielsweise Dämmstoff oder Dachbahnen, beziehungsweise vorhandener Unterkonstruktion gemeinsam mit verschiedenen Schrauben, die insbesondere eine unterschiedliche Größe aufweisen, das heißt verschiedene Durchmesser und/oder verschiedene Schraubenkopfgrößen, verwendet werden. Es kann somit eine einzige universell ausgeführte Tülle verwendet werden, so dass die Notwendigkeit, eine Vielzahl von verschiedenen Tüllen herzustellen und zu bevorraten, entfallen kann. Jeder der mindestens zwei Bereiche kann somit eine Zentrierung/Führung für eine mit der Tülle verwendbare Befestigungsschraube darstellen, deren Durchmesser gleich oder größer als der Durchmesser des Bereichs ist. Unabhängig davon kann jede der mindestens zwei Stufen einen axialen Anschlag für einen Schraubenkopf entsprechender Größe darstellen.

Es ist vorgesehen, dass der Hohlschaft an einer äußeren Oberfläche zumindest teilweise konisch zulaufend ausgebildet ist. Auf diese Weise kann besonders einfach ein Hindurchstecken der Tülle durch die zu befestigende Materialschicht unterstützt werden.

Weiterhin ist auch vorgesehen, dass der Hohlschaft mit radial aufweitbaren Elementen versehen ist. Die aufweitbaren Elemente unterstützen die Verwendung unterschiedlich großer/dicker Befestigungsschrauben, das heißt Befestigungsschrauben mit einem unterschiedlichen Durchmesser, indem eine kontrollierte Deformation der universell ausgeführten Tülle bei Verwendung einer Befestigungsschraube mit einem Durchmesser, der größer als der kleinste Durchmesser der mindestens zwei Bereiche ist, sichergestellt wird.

Es ist auch vorgesehen, dass die aufweitbaren Elemente außen in dem konisch zulaufend ausgebildeten Teil des Hohlschaftes als axiale Nuten ausgebildet sind. Durch die axialen Nuten kann besonders einfach die Deformation der universell ausgeführten Tülle bei Verwendung einer Befestigungsschraube, die den Verengungsabschnitt aufweitet, vorherbestimmt werden.

Es kann vorgesehen sein, dass von den mindestens drei Bereichen mindestens einer einen gleichbleibenden Durchmesser aufweist. Durch den über den Bereich gleichbleibenden Durchmesser kann für Befestigungsschrauben mit entsprechenden unterschiedlich dicken Gewindeschäften eine verbesserte Führung in der Tülle realisiert werden. Dabei könnte ein Bereich konisch ausgebildet sein. Es könnten aber auch die mindestens drei Bereiche verschiedene jeweils gleichbleibende Durchmesser haben.

Vorteilhafterweise kann vorgesehen sein, dass die unterschiedlichen über den jeweiligen Bereich gleichbleibenden Durchmesser der mindestens drei Bereiche ausgehend von einem dem Teller zugewandten Ende des Hohlschaftes abnehmen. Durch den von Bereich zu Bereich abnehmenden Durchmesser können bei einer einzigen universell ausgebildeten Tülle verschiedene axiale Anschläge für verschiedene Schrauben, die sich insbesondere in der Größe des aufnehmbaren Schraubenkopfes unterscheiden, bereitgestellt werden. Dies ermöglicht ein, insbesondere an das Gewicht des Dämmstoffs, angepasstes Herausragen der verwendeten Schrauben aus der vorhandenen Unterkonstruktion. Weiterhin kann auch eine an verschiedene Durchmesser der Befestigungsschraube angepasste Führung bereitgestellt werden.

Es kann auch vorgesehen sein, dass mindestens eine der mindestens zwei Stufen als axialer Anschlag für die Befestigungsschraube ausgeführt ist. Auf diese Weise können verschiedene definierte Endpositionen für verschiedene mit der Tülle verwendbare Befestigungsschrauben festgelegt werden.

Weiterhin kann vorgesehen sein, dass das Material, aus dem die Tülle hergestellt ist, eine geringere Festigkeit als die Befestigungsschraube aufweist, so dass die Stufenbohrung durch die zweite Befestigungsschraube aufweitbar ist. Auf diese Weise kann sichergestellt werden, dass die verwendete Befestigungsschraube nicht an der Tülle beschädigt wird. Weiterhin kann gerade die gegenüber der Befestigungsschraube geringere Festigkeit der Tülle die alternative Verwendung verschieden großer Befestigungsschrauben zusammen mit der universell ausgeführten Tülle gewährleisten, da ein Brechen des Hohlschaftes im Bereich der Stufenbohrung aufgrund der Aufweitbarkeit verhindert werden kann.

Weiterhin kann vorgesehen sein, dass die Nuten jeweils an ihrem dem Teller entgegengesetzten Ende offen sind. Dies erleichtert zunächst die Deformation des Verengungsabschnittes beim Aufweiten und erleichtert überdies das Einstecken der Tülle in den Dämmstoff, da statt eines durchgängigen Kreisrings mehrere kleinere, das heißt "spitzere" Kreisbogensegmente voneinander unabhängig den verwendeten Dämmstoff beim Einstecken perforieren.

Nützlicherweise kann vorgesehen sein, dass der Hohlschaft an seinem dem Teller entgegengesetzten Ende wenigstens mit zwei diametral entgegengesetzten axialen Nuten als aufweitbaren Elementen versehen ist. Dies stellt die einfachste symmetrische Anordnung mindestens zweier Nuten dar, durch die die Aufweitung des Verengungsabschnitts vorherbestimmt werden kann. Alternativ ist selbstverständlich auch das Vorsehen weiterer Nuten, die im Wesentlichen gleichmäßig beabstandet an dem von dem Teller abgewandten Ende der Tülle angeordnet werden können, möglich. Beispielsweise können statt zwei auch drei, vier, fünf oder sechs Nuten gleichmäßig um das von dem Teller abgewandte Ende der Tülle herum angeordnet sein. Die verschiedenen Nuten können unterschiedliche axiale Längen aufweisen, die beispielsweise an die Positionierung der mindestens zwei Bereiche angepasst sein können. Beispielsweise können verschiedene axiale Nuten auf der axialen Höhe verschiedener axialer Stufen enden.

Das erfindungsgemäße Befestigungselement umfasst eine erfindungsgemäße Tülle sowie eine von dieser aufnehmbare oder aufgenommene Befestigungsschraube, welche in der Unterkonstruktion verankerbar ist.

Vorteilhafterweise kann vorgesehen sein, dass die Schraube direkt unterhalb des Kopfes einen gewindefreien Schaftabschnitt hat.

Weiterhin kann vorgesehen sein, dass der gewindefreie Schaftabschnitt der Befestigungsschraube in einem der mindestens drei Bereiche ohne radiales Spiel aufnehmbar ist.

Nützlicherweise kann vorgesehen sein, dass die in die Tülle eingeführte Befestigungsschraube durch mindestens einen der mindestens drei Bereiche in vormontiertem Zustand spielfrei gehalten ist und/oder an einer der mindestens zwei Stufen axial anschlägt.

Die Erfindung wird nun mit Bezug auf die begleitenden Zeichnungen anhand bevorzugter Ausführungsformen beispielhaft erläutert.

Es zeigen:
- Figur 1: eine Schnittansicht durch eine Ausführungsform einer Tülle;
- Figur 2a: eine dreidimensionale Außenansicht eines Hohlschafts;
- Figur 2b: eine dreidimensionale Außenansicht eines weiteren Hohlschafts;
- Figur 3: eine Schnittansicht eines Hohlschafts mit vormontierter Befestigungsschraube;
- Figur 4: eine Detailansicht der Schnittansicht aus Figur 3;
- Figur 5: eine weitere Schnittansicht eines Hohlschafts mit vormontierter Befestigungsschraube;
- Figur 6: eine Detailansicht der Schnittansicht aus Figur 5;
- Figur 7: eine Schnittansicht einer ersten Ausführungsform eines Hohlschafts;
- Figur 8: eine Schnittansicht einer zweiten Ausführungsform eines Hohlschafts;
- Figur 9: eine Schnittansicht einer dritten Ausführungsform eines Hohlschafts;
- Figur 10: eine Schnittansicht einer vierten Ausführungsform eines Hohlschafts;
- Figur 11: eine Schnittansicht einer fünften Ausführungsform eines Hohlschafts; und
- Figur 12: eine Schnittansicht einer sechsten Ausführungsform eines Hohlschafts.

In den Zeichnungen bezeichnen gleiche Bezugszeichen gleiche oder gleichartige Teile.

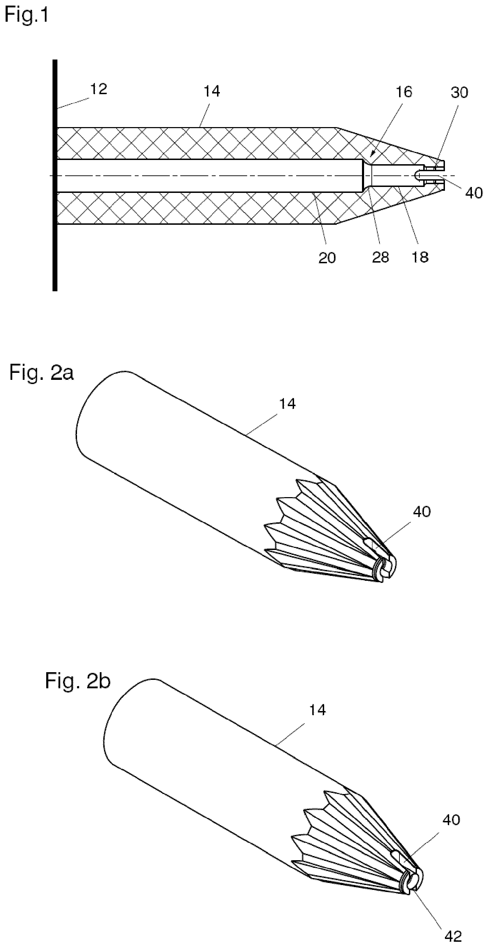

Figur 1 zeigt eine Schnittansicht durch eine Ausführungsform einer Tülle. Die in Figur 1 dargestellte Tülle 10 umfasst einen Hohlschaft 14 und einen an dem Hohlschaft 14 angeformten Teller 12. Der Hohlschaft 14 ist an seinem dem Teller 12 zugewandten Ende offen, so dass von diesem Ende des Hohlschafts 14 aus eine Befestigungsschraube durch den Teller 12 in den Hohlschaft 14 bis zu einer am anderen Ende des Hohlschafts 14 angeordneten Stufe 28 einer Stufenbohrung 16 eingeführt werden kann. Die Stufenbohrung 16 umfasst einen ersten Bereich 18 und einen zweiten Bereich 20, wobei der erste Bereich 18 einen geringeren Durchmesser als der zweite Bereich 20 hat. Zwischen dem ersten Bereich 18 und dem zweiten Bereich 20 ist die Stufe 28 angeordnet, die als ein axialer Anschlag für einen Kopf einer einzuführenden Schraube ausgebildet ist. An den ersten Bereich 18 kann sich weiterhin optional ein Verengungsabschnitt 30 anschließen, der einen weiteren Bereich darstellen kann. Der Verengungsbereich 30 schließt sich beispielsweise an dem Ende des Hohlschafts 14, das von dem Teller 12 abgewandt ist, an den ersten Bereich 18 an. Auf der Höhe des Verengungsabschnitts 30 können Nuten 40 angeordnet sein, die ein kontrolliertes Aufweiten des Verengungsabschnitts 30 erlauben. Die Nuten 40 können sich optional auch über weitere Bereiche erstrecken und so optional auch ein kontrolliertes Aufweiten der Tülle 10 erlauben. Die gesamte Tülle 10 kann insbesondere aus einem Kunststoff geformt sein, um beispielsweise eine gewünschte thermische Isolation der Befestigungsschrauben zu gewährleisten und um eine gegenüber den Befestigungsschrauben geringere Festigkeit und eine größere Verformbarkeit zu erzeugen. Der erste Bereich 18 stellt somit eine Schraubenzentrierung bereit, die im optionalen Verengungsabschnitt 30 nochmales "reduziert" sein kann. Der zweite Bereich 20 kann das freie Drehen des Kopfes einer angepassten Befestigungsschraube erlauben.

Figur 2a zeigt eine dreidimensionale Außenansicht eines Hohlschafts. Der in Figur 2a dargestellte Hohlschaft 14 zeigt insbesondere Nuten 40 an dem sich konisch verjüngenden Ende des Hohlschafts 14, welche an dem dem Teller 12 abgewandten Ende des Hohlschafts 14 angeordnet sind.

Figur 2b zeigt eine dreidimensionale Außenansicht eines weiteren Hohlschafts. Der in Figur 2b dargestellte Hohlschaft 14 unterscheidet sich von dem in Figur 2a dargestellten Hohlschaft 14 insbesondere durch in den Nuten 40 angeordnete dünne Böden 42, die beim Aufweiten des Verengungsabschnitts dehnbar oder zerbrechbar sind.

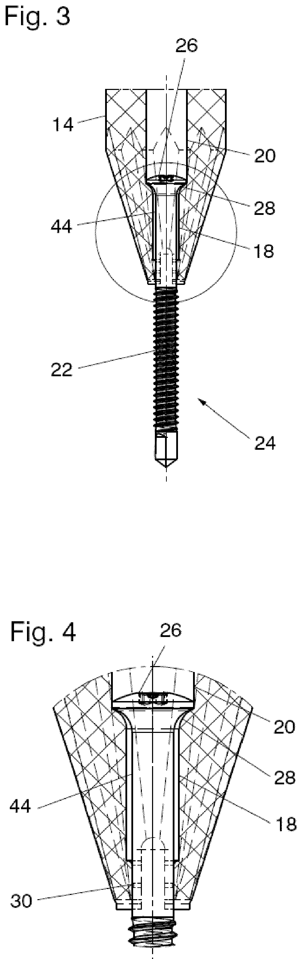

Figur 3 zeigt eine Schnittansicht eines Hohlschafts mit vormontierter Befestigungsschraube. Eine in Figur 3 dargestellte erste Befestigungsschraube 24 umfasst einen Kopf 26, der an der Stufe 28 zwischen dem ersten Bereich 18 und dem zweiten Bereich 20 in axialer Richtung anschlägt. Die erste Befestigungsschraube 24 umfasst weiterhin einen ersten Gewindeschaft 22 und zwischen dem ersten Gewindeschaft 22 und dem Kopf 26 einen optionalen gewindefreien Schaftabschnitt 44. Das Zusammenwirken zwischen der ersten Befestigungsschraube 24 und dem Hohlschaft 14 ist in Figur 4 dargestellt.

Figur 4 zeigt eine Detailansicht der Schnittansicht aus Figur 3. Wie Figur 4 zu entnehmen ist, kann der Durchmesser des gewindefreien Schaftabschnitts 44 dem Durchmesser des Verengungsabschnitts 30 entsprechen, so dass die erste Befestigungsschraube 24 von dem optionalen Verengungsabschnitt 30 formschlüssig geführt wird. Der nicht dem Verengungsabschnitt 30 zugehörige Abschnitt des ersten Bereichs 18 weist dementsprechend einen größeren Durchmesser als der optionale gewindefreie Schaftabschnitt 44 auf, so dass dort ein Spiel besteht. Wie Figur 3 und ansatzweise Figur 4 entnommen werden kann, kann der erste Gewindeschaft 22 der ersten Befestigungsschraube 24 einen größeren Durchmesser aufweisen als der erste optionale gewindefreie Schaftabschnitt 44, so dass die erste Befestigungsschraube 24 in der in Figur 3 dargestellten relativen Lage zu dem Hohlschaft 14 verliersicher gehalten werden kann. Dies ist auch ohne den optionalen ersten gewindefreien Schaftabschnitt 44 möglich. Der erste Gewindeschaft 22 kann bei der Vormontage der ersten Befestigungsschraube 24 an der Tülle 10 den Verengungsabschnitt 30 beispielsweise elastisch verformen, um die verliersichere Befestigung der ersten Befestigungsschraube 24 zu gewährleisten.

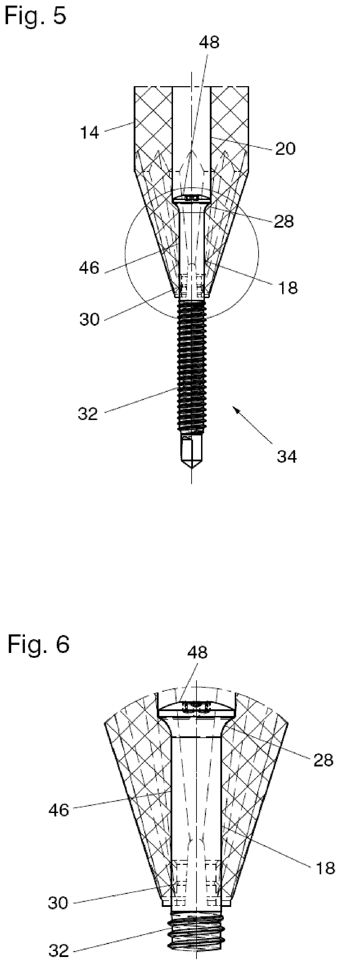

Figur 5 zeigt eine weitere Schnittansicht eines Hohlschafts mit vormontierter Befestigungsschraube. Der in Figur 5 dargestellte Hohlschaft 14 entspricht im Wesentlichen dem bereits aus Figur 3 bekannten Hohlschaft 14. Anstelle der ersten Befestigungsschraube 24 ist jedoch eine zweite Befestigungsschraube 34 vormontiert, die insbesondere einen gegenüber der ersten Befestigungsschraube 24 größeren Durchmesser aufweist. Die zweite Befestigungsschraube 34 umfasst analog zu der ersten Befestigungsschraube 24 einen Kopf 48 und einen zweiten Gewindeschaft 32 sowie einen zwischen dem Kopf 48 und einem zweiten Gewindeschaft 32 angeordneten optionalen gewindefreien Schaftabschnitt 46. Der Bereich zwischen dem Hohlschaft 14 und der zweiten Befestigungsschraube 34 ist vergrößert in Figur 6 dargestellt.

Figur 6 zeigt eine Detailansicht der Schnittansicht aus Figur 5. Wie Figur 6 zu entnehmen ist, hat auch der zweite Gewindeschaft 32 einen gegenüber dem gewindefreien Schaftabschnitt 46 größeren Durchmesser. Dementsprechend wird auch, analog zu der ersten Befestigungsschraube 24, die zweite Befestigungsschraube 34 an dem optionalen gewindefreien Schaftabschnitt 46 verliersicher in dem Hohlschaft 14 gehalten. Dies ist auch ohne den optionalen gewindefreien Schaftabschnitt 46 möglich. Aufgrund des größeren Durchmessers der zweiten Befestigungsschraube 34 wird jedoch der Verengungsabschnitt 30 von der zweiten Befestigungsschraube 34 bei der Vormontierung dauerhaft aufgeweitet, so dass die zweite Befestigungsschraube 34 kraftschlüssig in dem Verengungsabschnitt 30 gehalten wird. Weiterhin verbleibt auch kein Spiel zwischen dem gewindefreien Schaftabschnitt 46 und dem Rest des ersten Bereichs 18. Dort kann eine formschlüssige spielfreie Führung vorliegen.

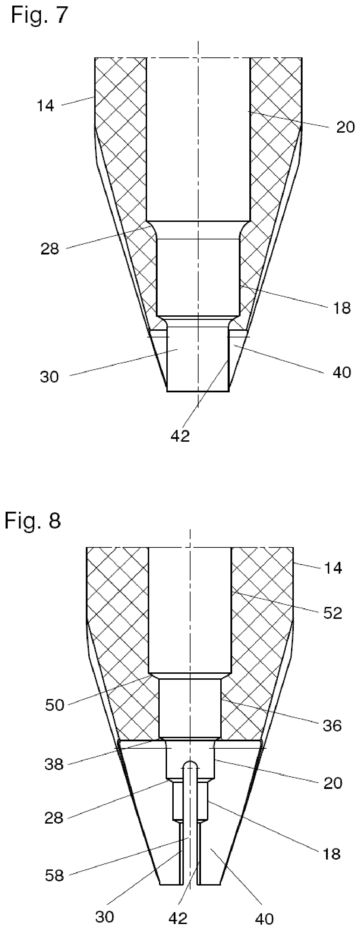

Figur 7 zeigt eine Schnittansicht einer ersten Ausführungsform eines Hohlschafts. Dargestellt in Figur 7 ist insbesondere das dem Teller 12 abgewandte Ende des Hohlschafts 14, an dem die Nuten 40 mit den Böden 42 in dem Verengungsbereich 30 angeordnet sind. Deutlich erkennbar ist ebenfalls die zwischen dem ersten Bereich 18 und dem zweiten Bereich 20 angeordnete Stufe 28, welche bei der in Figur 7 dargestellten ersten Ausführungsform als axialer Anschlag für Köpfe der Befestigungsschrauben ausgeführt ist und einen kontinuierlichen Übergang zwischen dem ersten Bereich 18 und dem zweiten Bereich 20 modelliert. Gegenüber der aus Figur 1 bereits bekannten Darstellung des Hohlschafts 14 ist die Schnittebene in Figur 7 um 90° um die Längsachse gedreht.

Figur 8 zeigt eine Schnittansicht einer zweiten Ausführungsform eines Hohlschafts. Die in Figur 8 dargestellte zweite Ausführungsform unterscheidet sich von der aus Figur 7 bereits bekannten ersten Ausführungsform insbesondere durch einen dritten Bereich 36, der sich an der von dem ersten Bereich 18 abgewandten Seite des zweiten Bereichs 20 an den zweiten Bereich 20 anschließt. Zwischen dem zweiten Bereich 20 und dem dritten Bereich 36 ist eine weitere Stufe 38 vorgesehen. Der dritte Bereich 36 hat einen größeren Durchmesser als der zweite Bereich 20. Die weitere Stufe 38 kann, genau wie die Stufe 28, als axialer Anschlag ausgeführt sein. Auf diese Weise können unterschiedliche Schraubenköpfe, das heißt Schraubenköpfe mit unterschiedlichen Durchmessern mit der universell ausgeführten Tülle, verwendet werden. Aufgrund der unterschiedlichen axialen Positionierung der Stufe 28 und der weiteren Stufe 38 können die Befestigungsschrauben verschieden weit in die Tülle eingeschraubt werden, so dass aus der Unterkonstruktion herausragende Enden der verwendeten Befestigungsschrauben unterschiedlich weit in die Befestigte Materialschicht, beispielsweise Dämmmaterial oder Dachbahnen, hineinragen. Auf diese Weise kann eine Anpassung an das Gewicht der befestigten Materialschicht erfolgen. Je nach Bedarf können weitere Bereiche mit unterschiedlichen Durchmessern in dem Hohlschaft 14 vorgesehen sein. Beispielsweise kann auf der von dem zweiten Bereich 20 abgewandten Seite des dritten Bereichs 36 ein zusätzlicher Bereich 52 vorgesehen sein, der einen nochmals größeren Durchmesser als der dritte Bereich 36 aufweisen kann. Zwischen dem dritten Bereich 36 und dem zusätzlichen Bereich 52 kann eine zusätzliche Stufe 50 vorgesehen sein, die ebenfalls als axialer Anschlag ausgebildet sein kann. Neben der Nut 40 ist, um 90° gedreht eine weitere Nut 58 in der Schnittansicht erkennbar. Die weitere Nut 58 erstreckt sich in axialer Richtung über den Verengungsabschnitt 30 und den ersten Bereich 18 hinaus bis in den zweiten Bereich 20 hinein, um ein kontrolliertes Aufweiten der Tülle bei der Verwendung einer "dicken" Schaube, das heißt einer Befestigungsschraube mit einem Schaftdurchmesser größer als der erste Bereich 18, zu erlauben.

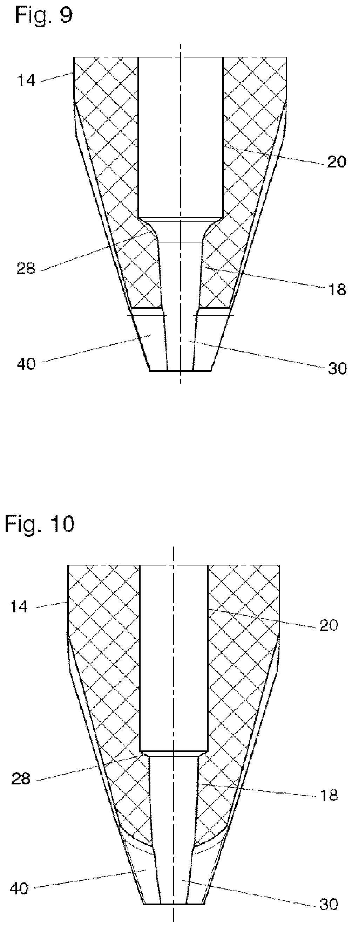

Figur 9 zeigt eine Schnittansicht einer dritten Ausführungsform eines Hohlschafts. Die in Figur 9 dargestellte dritte Ausführungsform des Hohlschafts 14 unterscheidet sich von dem aus Figur 7 bekannten Hohlschaft 14 insbesondere durch das konische Zulaufen des ersten Bereichs 18, der auch außerhalb des Verengungsabschnitts 30 einen ausgehend von dem zweiten Bereich 20 und der Stufe 28 abnehmenden Durchmesser aufweisen kann.

Figur 10 zeigt eine Schnittansicht einer vierten Ausführungsform eines Hohlschafts. Die in Figur 10 dargestellte vierte Ausführungsform unterscheidet sich von der aus Figur 9 bekannten dritten Ausführungsform durch eine besondere Ausgestaltung der Nuten 40 im Bereich des Verengungsabschnitts 30. Bei der in Figur 10 dargestellten vierten Ausführungsform sind die Nuten 40 an der Außenseite des Hohlschafts 14 weiter in Richtung des Tellers 12 hochgezogen, so dass eine besonders kontrollierte Aufweitung der Spitze des Hohlschafts 14 bei der Vormontage einer entsprechend dimensionierten Befestigungsschraube möglich wird.

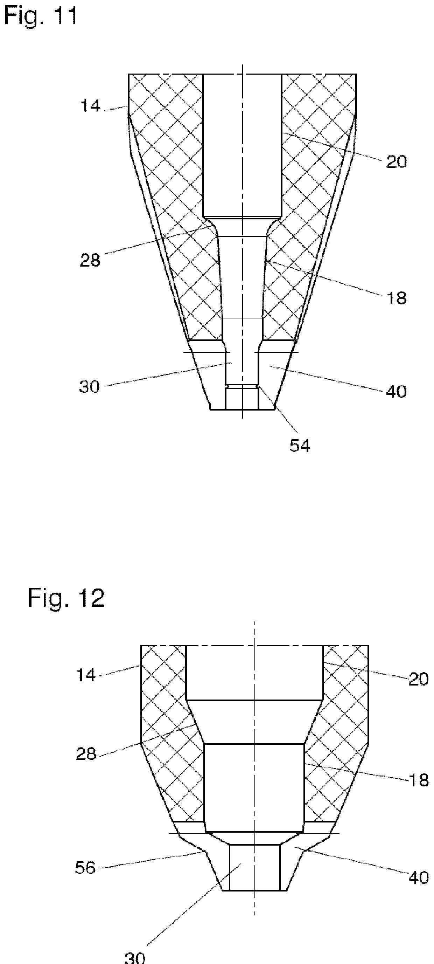

Figur 11 zeigt eine Schnittansicht einer fünften Ausführungsform eines Hohlschafts. Die in Figur 11 dargestellte fünfte Ausführungsform umfasst im Bereich des Verengungsabschnitts 30 eine Einkerbung 54, die der zusätzlichen kraftschlüssigen Fixierung einer vormontierten Befestigungsschraube dienen kann. Bei der in Figur 11 dargestellten fünften Ausführungsform sind die Nuten 40 über den Verengungsbereich 30 hinaus in den Rest des ersten Bereichs 18 erweitert, so dass die Aufweitung des Hohlzylinders durch eine entsprechend dimensionierte Befestigungsschraube besonders leicht ist.

Figur 12 zeigt eine Schnittansicht einer sechsten Ausführungsform eines Hohlschafts 14. Auch bei der in Figur 12 dargestellten sechsten Ausführungsform ist das dem Teller 12 abgewandte Ende des Hohlschafts 14 besonders ausgestaltet. Analog zu der aus Figur 11 bereits bekannten fünften Ausführungsform ist auch bei der sechsten Ausführungsform der Übergang zwischen dem Verengungsabschnitt 30 und dem nicht verengten Abschnitt des ersten Bereichs 18 unterhalb der Nuten 40 angeordnet. Weiterhin ist auf der Außenseite des Hohlschafts 14 im Bereich des Verengungsabschnitts 30 noch zusätzlich eine Kante 56 vorgesehen, die ein besonders definiertes Aufweiten der Spitze des Hohlschaftes 14 bei der Vormontage einer entsprechend dimensionierten Befestigungsschraube ermöglicht.

### Bezugszeichenliste

- 10: Tülle
- 12: Teller
- 14: Hohlschaft
- 16: Stufenbohrung
- 18: erster Bereich
- 20: zweiter Bereich
- 22: erster Gewindeschaft
- 24: erste Befestigungsschraube
- 26: Kopf
- 28: Stufe
- 30: Verengungsabschnitt
- 32: zweiter Gewindeschaft
- 34: zweite Befestigungsschraube
- 36: dritter Bereich
- 38: weitere Stufe
- 40: Nut
- 42: Boden
- 44: gewindefreier Schaftabschnitt
- 46: gewindefreier Schaftabschnitt
- 48: Kopf
- 50: zusätzliche Stufe
- 52: zusätzlicher Bereich
- 54: Einschnürung
- 56: Kante
- 58: weitere Nut

## Patentansprüche

1. Tülle (10) zum Befestigen einer Materialschicht auf einer Unterkonstruktion, umfassend einen Teller (12) und einen daran angeformten Hohlschaft (14) zur Aufnahme einer Befestigungsschraube (24; 34), wobei in dem Hohlschaft eine Stufenbohrung (16) vorgesehen ist, wobei die Stufenbohrung (16) mindestens zwei Stufen (28; 38; 50) zwischen mindestens drei Bereichen (18; 30; 36; 52) umfasst, wobei der Hohlschaft (14) an einer äußeren Oberfläche zumindest teilweise konisch zulaufend ausgebildet ist, wobei der Hohlschaft (14) mit radial aufweitbaren Elementen versehen ist, und wobei die aufweitbaren Elemente außen in dem konisch zulaufend ausgebildeten Teil des Hohlschaftes (14) als axiale Nuten (40) ausgebildet sind, **dadurch gekennzeichnet, dass** die Nuten (40) jeweils am Nutengrund zumindest teilweise mit einem dünnen, durch das Aufweiten dehn- oder zerbrechbaren axialen Boden (42) versehen sind.

2. Tülle (10) nach Anspruch 1, **dadurch gekennzeichnet, dass** die mindestens drei Bereiche (18; 30; 36; 52) unterschiedliche, jeweils gleichbleibende Durchmesser aufweisen.

3. Tülle (10) nach Anspruch 1 oder 2, **dadurch gekennzeichnet, dass** die unterschiedlichen über den jeweiligen Bereich gleichbleibenden Durchmesser der mindestens drei Bereiche (18; 30; 36; 52) ausgehend von einem dem Teller (12) zugewandten Ende des Hohlschaftes (14) abnehmen.

4. Tülle (10) nach einem der vorhergehenden Ansprüche, **dadurch gekennzeichnet, dass** mindestens eine der mindestens zwei Stufen (28; 38; 50) als axialer Anschlag für die Befestigungsschraube (24; 34) ausgeführt ist.

5. Tülle (10) nach einem der vorhergehenden Ansprüche, **dadurch gekennzeichnet, dass** die Nuten (40) jeweils an ihrem dem Teller (12) entgegengesetzten Ende offen sind.

6. Tülle (10) nach einem der vorhergehenden Ansprüche, **dadurch gekennzeichnet, dass** der Hohlschaft (14) an seinem dem Teller (12) entgegengesetzten Ende wenigstens mit zwei diametral entgegengesetzten axialen Nuten (40) als aufweitbaren Elementen versehen ist.

7. Befestigungselement zum Befestigen einer Materialschicht auf einer Unterkonstruktion, wobei das Befestigungselement zweiteilig ist und eine Tülle (10) nach einem der vorhergehenden Ansprüche sowie eine von dieser aufnehmbare oder aufgenommene Befestigungsschraube (24; 34), welche in der Unterkonstruktion verankerbar ist, umfasst.

8. Befestigungselement nach Anspruch 7, **dadurch gekennzeichnet, dass** die Schraube direkt unterhalb des Kopfes (26, 48) einen gewindefreien Schaftabschnitt (44, 46) hat.

9. Befestigungselement nach Anspruch 8, **dadurch gekennzeichnet, dass** der gewindefreie Schaftabschnitt (44, 46) der Befestigungsschraube (24; 34) in mindestens einem der mindestens drei Bereiche (18; 30; 36; 52) ohne radiales Spiel aufnehmbar ist.

10. Befestigungselement nach einem der Ansprüche 7 bis 9, **dadurch gekennzeichnet, dass** die in die Tülle (10) eingeführte Befestigungsschraube (24; 34) durch einen der mindestens drei Bereiche (18; 30; 36; 52) in vormontiertem Zustand spielfrei gehalten ist und/oder an einer der mindestens zwei Stufen (28; 38; 50) axial anschlägt.

11. Befestigungselement nach einem der Ansprüche 7 bis 10, **dadurch gekennzeichnet, dass** das Material, aus dem die Tülle (10) hergestellt ist, eine geringere Festigkeit als die Befestigungsschraube (24; 34) aufweist, so dass die Stufenbohrung (16) durch die Befestigungsschraube (24; 34) aufweitbar ist.

## Claims

1. Bushing (10) for fastening a material layer on an underlying structure, comprising a plate (12) and a hollow shank (14) integrally formed thereon for receiving a fastening screw (24; 34), a stepped hole (16) being provided in the hollow shank, the stepped hole (16) comprising at least two steps (28; 38; 50) between at least three regions (18; 30; 36; 52), at least part of the hollow shank (14) being tapered on an exterior surface, the hollow shank (14) being provided with elements that can be widened radially, and the elements that can be widened being formed as axial slots (40) in the tapered part of the hollow shank (14), **characterised in that** the base of each slot (40) is provided with a thin axial bottom (42) that can be expanded or split by the widening.

2. Bushing (10) according to claim 1, **characterised in that** the at least three regions (18; 30; 36; 52) comprise different, in each case constant diameters.

3. Bushing (10) according to either claim 1 or claim 2, **characterised in that** the different diameters of the at least three regions (18; 30; 36; 52), which diameters are constant across each region, decrease starting from an end of the hollow shank (14) facing the plate (12).

4. Bushing (10) according to any of the preceding claims, **characterised in that** at least one of the at least two steps (28; 38; 50) is formed as an axial abutment for the fastening screw (24; 34).

5. Bushing (10) according to any of the preceding claims, **characterised in that** the end of each of the slots (40) which is opposite the plate (12) is open.

6. Bushing (10) according to any of the preceding claims, **characterised in that** the end of the hollow shank (14) which is opposite the plate (12) is provided with at least two diametrically opposed axial slots (40) in the form of elements that can be widened.

7. Fastening element for fastening a material layer on a underlying structure, wherein the fastening element has two parts and comprises a bushing (10) according to any of the preceding claims and a fastening screw (24; 34) which can be or has been received by said bushing and can be anchored in the underlying structure.

8. Fastening element according to claim 7, **characterised in that** the screw has a thread-free shank portion (44, 46) directly underneath the head (26, 48).

9. Fastening element according to claim 8, **characterised in that** the thread-free shank portion (44, 46) of the fastening screw (24; 34) can be received in at least one of the at least three regions (18; 30; 36; 52) without radial clearance.

10. Fastening element according to any of claims 7 to 9, **characterised in that**, in the pre-assembled state, the fastening screw (24; 34) inserted into the bushing (10) is held by one of the at least three regions (18; 30; 36; 52) in a clearance-free manner and/or axially abuts one of the at least two steps (28; 38; 50).

11. Fastening element according to any of claims 7 to 10, **characterised in that** the material from which the bushing (10) is produced has a lower rigidity than the fastening screw (24; 34) such that the stepped hole (16) can be widened by the fastening screw (24; 34).

## Revendications

1. Douille (10) pour permettre la fixation d'une couche de matériau sur une structure de base comprenant un plateau (12) et un arbre creux (14) formé sur celui-ci pour recevoir une vis de fixation (24, 34), un perçage à gradins (16) étant prévu dans l'arbre creux, ce perçage à gradins (16) comprenant au moins deux gradins (28, 38, 50) situés entre au moins trois zones (18, 30, 36, 52), l'arbre creux (14) s'étendant au moins partiellement coniquement sur sa surface externe, l'arbre creux (14) étant équipé d'éléments susceptibles de s'élargir radialement, et ces éléments susceptibles de s'élargir radialement étant réalisés sous la forme de rainures axiales (40), à l'extérieur de la partie d'arbre creux (14) s'étendant coniquement sur sa surface externe,
**caractérisée en ce que**
les rainures (40) sont respectivement équipées au niveau de leur base, au moins partiellement, d'un fond axial mince (42), pouvant être dilaté ou rompu par l'élargissement.

2. Douille (10) conforme à la revendication 1,
**caractérisée en ce que**
les trois zones (18, 30, 36, 52) ont des diamètres différents, mais restant constants.

3. Douille (10) conforme à la revendication 1 ou 2,
**caractérisée en ce que**
les diamètres des trois zones (18, 30, 36, 52) différents mais restant constants sur la zone respective décroisent à partir de l'extrémité de l'arbre creux (14) tournée vers le plateau (12).

4. Douille (10) conforme à l'une des revendications précédentes,
**caractérisée en ce qu'**
au moins l'un des gradins (28, 38, 50) est réalisé sous la forme d'une butée axiale pour la vis de fixation (24, 34).

5. Douille (10) conforme à l'une des revendications précédentes,
**caractérisé en ce que**
les rainures (40) sont respectivement ouvertes à leur extrémité opposée au plateau (12).

6. Douille (10) conforme à l'une des revendications précédentes,
**caractérisé en ce que**
l'arbre creux (14) est équipé, à son extrémité opposée au plateau (12) d'au moins deux rainures axiales (40) diamétralement opposées constituant des éléments susceptibles d'être élargis.

7. Elément de fixation pour permettre la fixation d'une couche de matériau sur une structure de base, cet élément de fixation étant réalisé en deux parties et comprenant une douille (10) conforme à l'une des revendications précédentes ainsi qu'une vis de fixation (24, 34) pouvant être logée ou logée dans celle-ci susceptible d'être ancrée dans la structure de base.

8. Elément de fixation conforme à la revendication 7,
**caractérisé en ce que**
la vis comprend un segment de tige (44, 46) exempt de filetage situé directement au-dessous de sa tête (26, 48).

9. Elément de fixation conforme à la revendication 8,
**caractérisé en ce que**
le segment de tige exempt de filetage (44, 46) de la vis de fixation (24, 34) peut être logé dans au moins l'une des trois zones (18, 30, 36, 52) sans jeu radial.

10. Elément de fixation conforme à l'une des revendications 7 à 9,
**caractérisé en ce que**
la vis de fixation (24, 34) introduite dans la douille (10) est maintenue sans jeu à l'état prémonté, au travers de l'une des trois zones (18, 30, 36, 52), et/ou vient axialement en butée contre au moins l'un des deux gradins (28, 38, 50).

11. Elément de fixation conforme à l'une des revendications 7 à 10,
**caractérisé en ce que**
le matériau dans lequel est réalisé la douille (10) a une résistance mécanique plus faible que la vis de fixation (24, 34) de sorte que le perçage à gradins (16) puisse être élargi par la vis de fixation (24, 34).
